# FASCICULE DE BREVET EUROPEEN

(11) **EP 2 803 544 B1**
(45) Date de publication et mention de la délivrance du brevet: **07.11.2018**
(21) Numéro de dépôt: 14167267.5
(22) Date de dépôt: 06.05.2014
(51) Int. Cl.: B60S 1/40, B60S 1/38, B60S 1/52

(54) **Ensemble pour la réalisation d'un système d'essuyage de pare brise de véhicule automobile et dispositif de connexion comprenant un tel ensemble**
Einheit zur Umsetzung eines Scheibenwischsystems für Kraftfahrzeug, und Verbindungsvorrichtung, die eine solche Einheit umfasst
Assembly for producing a windscreen-wiper system for a motor vehicle and connection device including such an assembly

(30) Priorité: 13.05.2013 FR 1354269
(43) Date de publication de la demande: 19.11.2014
(73) Titulaire: Valeo Systèmes d'Essuyage, 78322 Le Mesnil Saint Denis (FR)
(72) Inventeur: Caillot, Gérald, 78720 CERNAY LA VILLE (FR); Thebault, Denis, 63000 Clermont Ferrand (FR)
(74) Mandataire: Callu-Danseux, Violaine

(56) Documents cités:
- EP-A1- 2 460 700
- FR-A1- 2 968 256
- FR-A1- 2 968 259
- US-A1- 2011 113 580

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. En position de travail, ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au porte-balai de l'essuie-glace par un ensemble constitué d'un connecteur mécanique et d'un adaptateur. Le connecteur mécanique est une pièce qui est sertie sur le palonnier ou directement sur le balai plat, alors que l'adaptateur est une pièce intermédiaire qui permet la fixation du connecteur sur le porte-balai de l'essuie-glace. Ces deux pièces sont reliées l'une à l'autre par un axe transversal qui autorise leur rotation relative, dans un plan perpendiculaire au pare-brise et passant par le porte-balai.

Il est également connu de munir les véhicules de dispositifs permettant d'amener un liquide lave-vitre qui est acheminé depuis un réservoir situé sous le capot et qui est pulvérisé en direction du pare-brise par des buses situées soit à proximité du pare-brise, soit sur l'essuie-glace lui-même pour une meilleure distribution du liquide. Dans le cas de buses placées sur les balais, le liquide lave-vitre est acheminé par des canalisations qui sont fixées sur le porte-balai de l'essuie-glace et qui sont raccordées au balai au niveau du connecteur mécanique par une interface de connexion. L'interface de connexion se fixe sur le connecteur mécanique par des embouts appropriés et assure une nécessaire étanchéité avec lui.

Alors que les canalisations de liquide et l'interface de connexion sont généralement liées au porte-balai de l'essuie-glace, l'interface de connexion est liée au balai et il est nécessaire d'assurer le branchement de l'interface de connexion sur le connecteur mécanique lors d'un changement de balai. Cette opération s'effectue dans une position, dite de service.

Il est nécessaire de veiller à ce que l'interface de connexion soit correctement alignée, lors de l'installation dans le connecteur mécanique, faute de quoi un mauvais assemblage se traduirait par un risque de fuite du liquide lave-vitre et/ou un défaut d'isolation électrique au niveau de la jonction des deux connecteurs.

En outre, lors du désaccouplement ou démontage du balai par rapport au porte-balai, il importe que l'interface de connexion reste attachée au porte-balai. Ceci évite que l'interface de connexion ne soit entraînée par le connecteur mécanique dans son mouvement de séparation d'avec le porte-balai de l'essuie-glace.

Il faut cependant que, après montage du balai dans le bras, l'interface de connexion ne limite pas la nécessaire liberté de mouvement en rotation de l'adaptateur par rapport au connecteur mécanique, en particulier quand le système d'essuyage est à nouveau dans sa position de travail.

On connait à cette fin des balais d'essuie glace dont l'interface de connexion est maintenue en position de service par encliquetage dans des ouvertures d'une pièce rapportée au bras porte balai. Cette disposition nécessite cependant une pièce intermédiaire relativement complexe à réaliser et à assembler au bras. FR-A-2968259 montre le préambule de la revendication 1.

La présente invention a pour but de remédier à ces inconvénients en tout ou partie.

A cet effet, l'invention a pour objet un ensemble pour la réalisation d'un système d'essuyage de pare brise de véhicule automobile comprenant une pièce terminale d'un bras porte-balai d'essuyage destiné à déplacer un balai d'essuyage, ledit ensemble comprenant en outre une interface de connexion, notamment un connecteur hydraulique et/ou électrique d'amenée d'un liquide au balai d'essuyage et/ou pour le chauffage du liquide, ladite pièce terminale étant configurée pour accueillir un adaptateur permettant la rotation entre ledit bras et le balai, ladite pièce terminale accueillant intérieurement ladite interface de connexion.

Selon l'invention, ladite pièce terminale est configurée pour mettre en prise ladite interface de connexion de façon orientée, relativement à la pièce terminale, par l'intermédiaire d'au moins une patte repliée et issue de matière avec ladite pièce terminale, dans une position, dite de service, autorisant la déconnexion et/ou la connexion du balai sur le bras.

Ainsi, l'interface de connexion est immobilisée de façon orientée en position de service sans pièce intermédiaire, en étant indexé en position sur le bras, aussi bien pour la déconnexion que pour la connexion dudit balai sur le bras. Hors de ladite position de service, ledit ensemble est configuré pour que ladite interface de connexion soit libre par rapport à la pièce terminale. Ladite pièce terminale est configurée pour que la mise en prise soit obtenue par un mouvement du balai par rapport au bras, par exemple, une rotation du balai par rapport au bras.

La mise en prise est ainsi obtenue dans une position déterminée, avantageusement une position correspondant à un angle d'apiquage nul ou proche, voire négatif, du balai par rapport au bras, ce qui permet de ne pas limiter la rotation du balai par rapport au bras car ladite mise en prise n'interfère pas avec la position de travail.

Ladite position de mise en prise est avantageusement ressentie par l'utilisateur notamment par la présence d'un point dur de verrouillage déterminant la position de service.

Selon l'invention, les caractéristiques suivantes pourront être utilisées, prises séparément ou en combinaison :
- ladite pièce terminale comporte un corps configuré pour solidariser ladite interface de connexion audit corps, lors de ladite mise en prise, par assemblage à des formes issues de matière dudit corps,
- la pièce terminale et ladite interface de connexion sont pourvues de formes complémentaires permettant leur assemblage l'une à l'autre solidairement, lors de ladite mise en prise, par exemple par clipage,
- la pièce terminale présente au moins une patte repliée à l'intérieur de ladite pièce terminale et est issue de matière avec ladite pièce terminale.
- ledit corps est configuré pour accueillir ledit adaptateur, notamment par un mouvement de translation selon un axe longitudinal d'extension de la pièce terminale,
- ledit corps est configuré pour permettre une fixation dudit adaptateur sur ladite pièce terminale, de façon réversible, par exemple au moyen d'un bouton escamotable de verrouillage,
- la pièce terminale comprend au moins une patte pourvue d'un orifice pour permettre l'engagement d'un pion de l'interface de connexion lors de ladite mise en prise de ladite interface de connexion à la pièce terminale,
- ladite patte est pourvue d'un pion pour permettre l'engagement d'un évidement ou d'un orifice de l'interface de connexion lors de la mise en prise de ladite interface de connexion à la pièce terminale,
- ladite patte est disposée à l'intérieur de la partie terminale, en étant ainsi non visible,
- ladite patte est formée au niveau d'une partie supérieure de la pièce terminale, c'est-à-dire d'une partie de la pièce terminale destinée à être opposée au balai, ceci de préférence en partie médiane,
- ladite patte est issue de découpe d'une paroi dudit corps formant un orifice recevant le bouton escamotable de verrouillage,
- ledit pion comporte un crantage ou une déformation correspondant à ladite mise en prise,
- ladite patte est formée sur une partie latérale de la pièce terminale,
- ladite patte est issue de découpe et pliage d'une paroi du corps de la pièce terminale,
- ledit ensemble comporte deux pattes formées chacune sur une partie latérale de la pièce terminale et éventuellement symétriques l'une de l'autre par rapport à un plan longitudinal médian de la pièce terminale,
- ladite interface de connexion comprend au moins un ergot conformé pour coopérer avec la ou lesdites pattes lors de ladite mise en prise de l'interface de connexion à la pièce terminale,
- ladite interface de connexion comprend, par exemple, un connecteur hydraulique et/ou électrique.

L'invention porte également sur un dispositif de connexion d'un système d'essuyage de pare brise de véhicule comprenant ledit ensemble tel que décrit plus haut, un connecteur mécanique, destiné à être fixé sur ledit balai pour son rattachement au bras porte-balai et ledit adaptateur destiné à être monté articulé sur ledit connecteur mécanique pour permettre la rotation entre le balai et le bras, ledit adaptateur étant configuré pour être inséré dans ladite pièce terminale.

Ladite pièce terminale, ledit adaptateur et/ou ledit connecteur mécanique sont mutuellement configurés pour guider le connecteur mécanique et/ou l'adaptateur, notamment en translation, dans ladite pièce terminale lors de l'insertion de l'un dans l'autre. Ledit connecteur mécanique est en outre configuré pour permettre un raccordement hydraulique et/ou électrique du balai à ladite interface de connexion.

L'invention permet, en position de service, lors d'un changement de balai, un alignement de ladite interface de connexion et dudit connecteur mécanique. En position de travail, il pourra être prévu que le connecteur mécanique supporte le connecteur hydraulique et/ou le connecteur électrique.

Le verrouillage de connexion du connecteur mécanique sur le porte-balai est assuré par l'adaptateur, par l'intermédiaire du bouton de verrouillage de ce dernier coopérant dans une ouverture prévue à cet effet dans la pièce terminale.

L'invention concerne également un système d'essuyage de pare brise de véhicule comprenant un balai, un bras porte-balai et un dispositif de connexion, tel que décrit ci-dessus, pour l'accrochage du balai au bras porte-balai et leur raccordement hydraulique et/ou électrique.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale, en perspective, d'un système d'essuyage pour véhicule automobile comprenant un dispositif de connexion selon un mode de réalisation de l'invention ;
- la figure 2 est une vue de détail de la figure 1 ;
- la figure 3 est une vue schématique en coupe longitudinale d'un dispositif de connexion d'un système d'essuyage de pare brise de véhicule selon un premier mode de réalisation de l'invention, en position de travail ;
- la figure 4 est une vue en perspective, en coupe longitudinale, de ce dispositif de connexion en position de service ;
- la figure 5 est une vue schématique, en coupe longitudinale, du dispositif de la figure 4 ;
- la figure 6 est une vue analogue à la figure 5, montrant la déconnexion du connecteur mécanique du dispositif de connexion ;
- la figure 7 est une vue en perspective de la pièce terminale du dispositif de connexion selon un deuxième mode de réalisation de l'invention; et
- la figure 8 est une vue schématique, en coupe longitudinale du dispositif de connexion selon le deuxième mode de réalisation, en position de service.

Il faut noter que les figures exposent l'invention de manière détaillée et qu'elles peuvent, bien entendu, servir à mieux définir l'invention le cas échéant.

Dans la suite de la description, les dénominations longitudinales ou latérales se réfèrent à l'orientation du bras porte-balai sur lequel est monté le balai d'essuie-glace. La direction longitudinale correspond à l'axe principal du porte-balai dans lequel il s'étend alors que les orientations latérales correspondent à des droites concourantes, c'est-à-dire qui croisent la direction longitudinale, notamment perpendiculaires à l'axe longitudinal du porte-balai. Pour les directions longitudinales, la dénomination avant désigne la direction allant depuis une extrémité proximale vers une extrémité distale du bras porte-balai et la dénomination arrière la direction opposée. En outre, les directions référencées comme supérieures ou inférieures correspondent à des orientations perpendiculaires au plan de rotation du porte-balai, la dénomination inférieure contenant le plan du pare-brise.

Enfin, des références numériques identiques sont utilisées pour désigner des éléments identiques ou analogues.

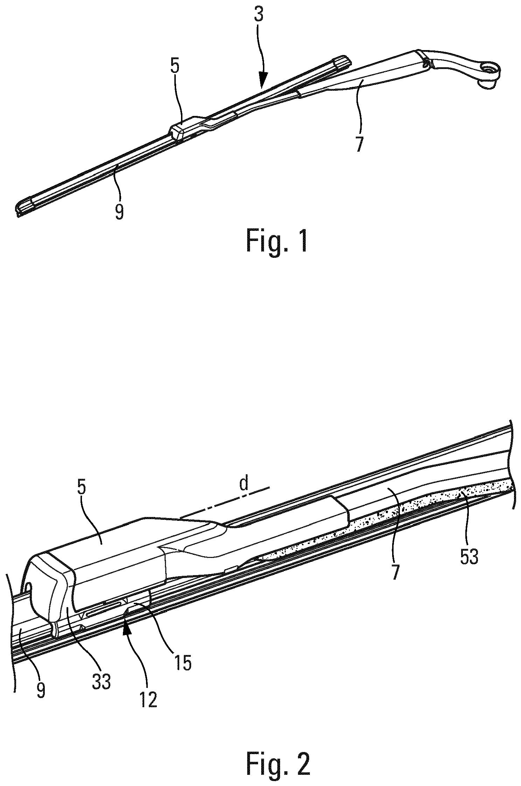

Comme illustré aux figures 1 et 2, l'invention concerne un système d'essuyage 3 comprenant un balai 9 et un bras porte-balai 7. Les balais 9 sont des balais plats tels qu'évoqués plus haut, connus en eux-mêmes. Ledit système comprend en outre un dispositif de connexion 12 du balai 9 au bras 7.

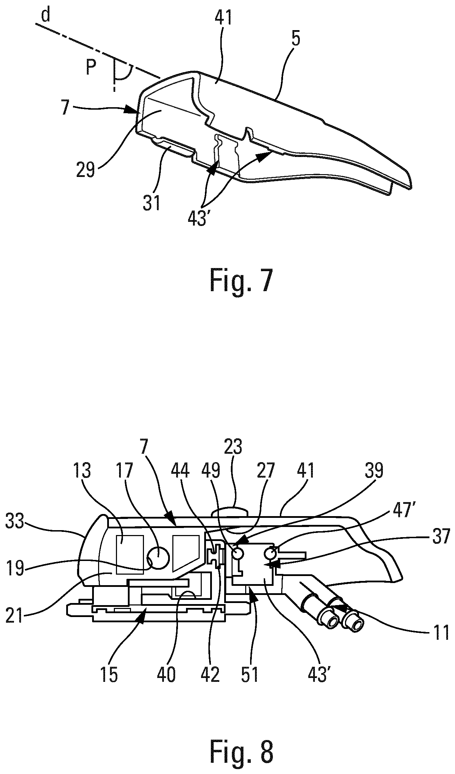

On pourra se reporter à la figure 8 pour une description plus détaillée des éléments d'un mode de réalisation dudit dispositif de connexion 12. Il comprend un adaptateur 13 et un connecteur mécanique 15, l'adaptateur 13 et le connecteur mécanique 15 représentés à cette figure convenant non seulement au second mode de réalisation de l'invention en cause à ces figures mais aussi au premier mode de réalisation ainsi que, plus généralement, à d'autres modes non-illustrés.

Ledit adaptateur 13 permet la rotation entre le balai 9 et le bras porte-balai 7. En effet, le balai doit présenter au moins un degré de liberté en rotation par rapport au bras porte-balai, et plus spécifiquement par rapport à une pièce terminale 5 dudit bras 7, pour permettre au balai de suivre la courbure du vitrage à essuyer. Ledit adaptateur 13 est monté articulé sur le connecteur mécanique 15, lequel comprend ici pour cela des pions 17 ménagés sur ses flancs latéraux, lesdits pions coopérant avec des orifices 19 ménagés sur des flancs latéraux dudit adaptateur. Le connecteur mécanique 15 est, par exemple, inséré dans une chape 21 de l'adaptateur.

L'adaptateur 13 est configuré pour s'insérer dans la pièce terminale 5 par un mouvement de translation selon un axe longitudinal d d'extension de la pièce terminale 53, pour venir en position d'utilisation, où il est situé en butée contre la pièce terminale 5 dans laquelle il est fixé de façon réversible au moyen d'un bouton escamotable 23 de verrouillage, qui coopère avec un évidement 25 pratiqué à cet effet dans la pièce terminale 5. Dans cette position, ladite pièce terminale 5 recouvre l'adaptateur 13. Le bouton escamotable 23 et/ou l'évidement 25 sont ici prévus en partie supérieure, respectivement dudit adaptateur 13 et de ladite pièce terminale 5, ledit bouton 23 étant situé à l'extrémité arrière d'une patte flexible 27 de l'adaptateur. De nombreuses variantes de verrouillage sont possibles.

La pièce terminale 5 présente ici une forme en « U » renversé où l'ouverture de cette forme en « U » fait face au pare-brise. La forme en chape 21 de l'adaptateur 13 est, par exemple, complémentaire au volume interne de la pièce terminale 5, de sorte à venir se loger dans cette dernière. Lors de la mise en place du balai 9 dans le bras porte-balai 7, l'adaptateur est introduit dans ladite pièce terminale par une ouverture 29 prévue à l'extrémité distale de cette dernière et guidé en translation dans celle-ci par des rebords 31 de ses flancs latéraux (figure 7).

Le connecteur mécanique 15 solidarisé au balai 9 ou de préférence l'adaptateur 13 pourra présenter une paroi externe 33, dénommée casquette, fermant la partie avant de la pièce terminale 5.

Cela étant, selon l'invention, l'invention concerne également un ensemble 1 pour la réalisation du système d'essuyage 3. Ledit ensemble comporte la pièce terminale 5 du bras 7 et une interface de connexion 11 logée dans cette pièce terminale 5. Ladite interface de connexion 11 comprend ici un connecteur hydraulique et/ou un connecteur électrique, éventuellement solidarisés l'un à l'autre, dits dans la suite connecteur hydraulique et/ou électrique. Ladite interface de connexion sert à amener un liquide au balai d'essuyage 9 et/ou pour le chauffage du liquide et/ou du balai.

La face opposée à la casquette 33, dite face intérieure, est tournée vers ledit connecteur hydraulique et/ou électrique 11.

Le connecteur mécanique 15 comporte ici des orifices 40 de connexion avec des conduits correspondants 51 du connecteur hydraulique 37 et menant à des canaux internes 53 de distribution du liquide lave-glace au balai, et des orifices 42 pour la connexion de fiches 44 du connecteur électrique 39. Il pourra en particulier y avoir un ou deux orifices 40 de connexion, correspondant respectivement à un ou deux conduits 51 du connecteur hydraulique et/ou à un ou deux canaux interne 53 du balai.

Ladite pièce terminale 5 est configurée pour mettre en prise ledit connecteur hydraulique et/ou électrique 11, de façon orientée relativement à la pièce terminale 5, dans une position autorisant la déconnexion et/ou la connexion du connecteur 11 sur le bras 7, c'est-à-dire, en position de service.

Plus précisément, ladite pièce terminale 5 comporte un corps 41 configuré pour solidariser ledit connecteur hydraulique et/ou électrique 11 à lui-même, lors de ladite mise en prise, par assemblage de différentes parties dudit corps 41 avec le connecteur 11 et/ou par assemblage à des formes issues de matière dudit corps 41 avec le connecteur hydraulique et/ou électrique 11.

La pièce terminale 5 et ledit connecteur hydraulique et/ou électrique 11 peuvent encore être pourvus de formes complémentaires permettant leur assemblage l'un à l'autre solidairement, lors de ladite mise en prise, par exemple par clipage, coincement ou autre. De manière commune aux différents modes de réalisation, la pièce terminale 5 du bras 7 présente au moins une patte 43, 43' repliée issue de matière de ladite pièce terminale 5 agencée pour retenir le connecteur hydraulique et/ou électrique 11 autrement dit interface de connexion 11.

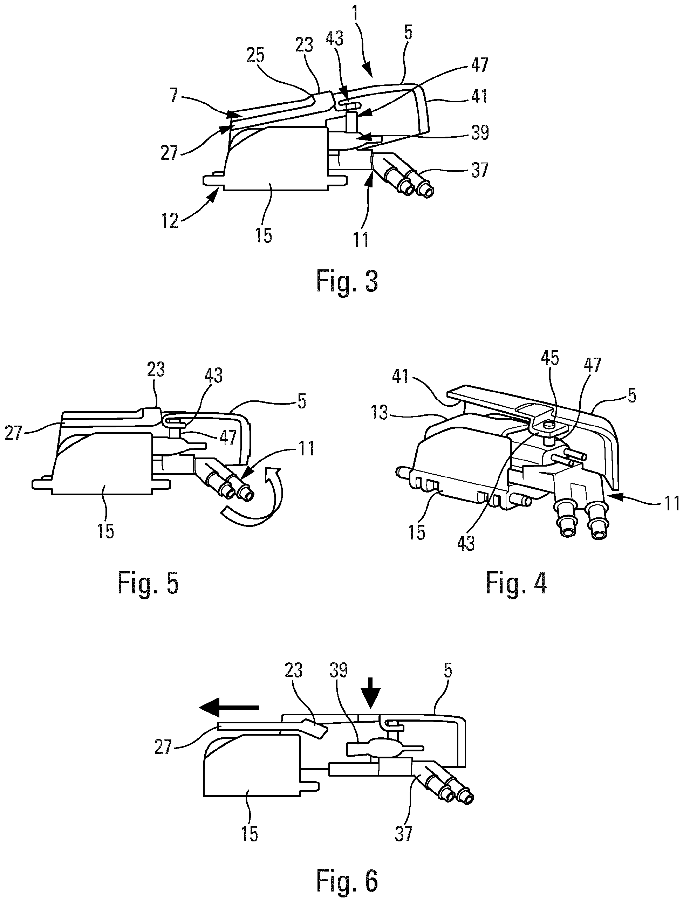

Selon le premier mode de réalisation représenté aux figures 3 à 6, la pièce terminale 5 comprend une patte 43 repliée pourvue d'un orifice 45 pour permettre l'engagement d'un pion 47 du connecteur hydraulique et/ou électrique et ainsi ladite mise en prise du connecteur hydraulique et/ou électrique à la pièce terminale 5. Plus précisément, le pion 47 est formé sur le connecteur hydraulique 37 et/ou est monté sur le connecteur électrique 39 pour solidariser ce dernier au connecteur hydraulique.

Ladite patte 43 est disposée à l'intérieur de la pièce terminale 5, en étant ainsi non visible. Elle est formée à la partie supérieure de la pièce terminale, en particulier en partie médiane de celle-ci. Elle pourra être issue de découpe et pliage d'une paroi du corps 41 de la pièce terminale formant ledit évidement 25.

La pièce terminale 5 selon le deuxième mode de réalisation représenté aux figures 7 et 8 comprendre ici au moins une patte 43' conformée pour recevoir en prise, par exemple par clipage, au moins un ergot 47' dudit connecteur hydraulique et/ou électrique lors de ladite mise en prise du connecteur hydraulique et/ou électrique à la pièce terminale.

Ladite patte 43' est formée, notamment, sur une partie latérale de la pièce terminale 5, en étant par exemple repliée vers l'intérieur de celle-ci et donc non visible.

Ladite patte est ici aussi issue de découpe et pliage d'une paroi du corps 41, en particulier d'un bord latéral de la pièce terminale 5.

Ledit ensemble 1 représenté comporte avantageusement deux pattes 43' formées chacune sur une partie latérale de la pièce terminale 5 et symétriques l'une de l'autre par rapport à un plan longitudinal médian P de la pièce terminale. Les pattes 43' coopèrent ensemble à la mise en prise avec les ergots 47'du connecteur hydraulique et/ou électrique, de préférence recevant chacune deux ergots 47' dans deux évidements opposés 49 de sa partie supérieure. Lesdites pattes 43' pourront présenter des pentes inclinées favorisant ledit clipage.

Lesdites pattes 43, 43' sont situées à distance de l'axe de rotation de l'adaptateur par rapport au connecteur mécanique.

Ladite mise en prise est avantageusement obtenue dans une position du connecteur hydraulique et/ou électrique parallèle à la direction de l'axe d'extension longitudinal d de la pièce terminale, c'est à dire lorsque la pièce terminale 5 et les conduits 51 ou fiches 44 du connecteur hydraulique et/ou électrique sont disposés selon ladite direction d'extension longitudinale d de la pièce terminale.

Ladite pièce terminale 5 est en outre configurée pour permettre la désolidarisation de ladite mise en prise de la pièce terminale 5 et dudit connecteur hydraulique et/ou électrique. Autrement dit, la position de mise en prise du connecteur hydraulique et/ou électrique peut être quittée par rotation du balai 9 par rapport au bras 7, en exerçant une pression sur le balai à cet effet, pour retrouver la position de travail du système d'essuyage 3.

Ainsi, ladite mise en prise est obtenue par un mouvement du balai 9 par rapport audit bras 7, en léger forçage, et/ou de même la désolidarisation pour le passage du système d'essuyage en position de travail.

On notera que dans les modes de réalisations précédents, en position de travail, il n'y a pas de pièce support du connecteur hydraulique et/ou électrique dans la pièce terminale. Au contraire, le connecteur hydraulique et/ou électrique est porté par ledit connecteur mécanique 15, en particulier grâce à un crochetage du connecteur hydraulique et/ou électrique.

Le fonctionnement des dispositifs de connexion est à présent décrit.

Pour changer un balai, il suffit de mettre en prise le connecteur hydraulique et/ou électrique 11 relativement à la pièce terminale 5, par exemple en tournant le balai 9 par rapport au bras 7, tel que représenté à la figure 3. Ceci s'effectue dans une position de service, hors de la mise en prise, jusque dans la position de mise en prise du connecteur et de la pièce terminale, à savoir ladite position d'angle d'apiquage nul ou négatif du balai par rapport au bras. Il faut exercer une pression sur le balai dans le sens de la rotation selon la flèche de la figure 5 pour la mise en prise. On engage alors le pion 47 du connecteur dans l'orifice 45 de la patte 43 pour le premier mode de réalisation (figure 4) et on engage les ergots 47' de connecteur dans les évidements 49 de la patte 43' pour le deuxième mode de réalisation (figure 8). A ce moment, la mise en prise étant réalisée, le bouton de verrouillage 23 de l'adaptateur peut être enfoncé comme représenté à la figure 6, et l'adaptateur 13 et donc le connecteur mécanique et le balai 9 qui y est fixé, peuvent être extrait en translation de la pièce terminale 5.

La connexion en vue du remplacement du balai 9 par un autre s'effectue selon un mouvement inverse au précédent, le verrouillage du bouton 23 étant réalisé dans la position de mise en prise, à la fin de l'insertion de l'adaptateur 13 dans la pièce terminale et donc du balai dans le bras. A ce moment, le balai 9 peut être tourné par rapport au bras 7 pour mettre hors de prise le connecteur hydraulique et/ou électrique et la pièce terminale et permettre la mise en service du système d'essuyage.

L'invention apporte ainsi une possibilité de remplacement facile d'un balai par un autre dans les équipements pour l'essuyage des vitres des automobiles comprenant des balais d'essuyage, en particulier réalisés sous la forme dénommée "flat blade".

## Revendications

1. Ensemble (1) pour la réalisation d'un système d'essuyage (3) de pare brise de véhicule automobile comprenant une pièce terminale (5) d'un bras (7) porte-balai d'essuyage destiné à déplacer un balai d'essuyage (9), ledit ensemble comprenant en outre une interface de connexion (11), ladite pièce terminale (5) étant configurée pour accueillir un adaptateur (13) permettant la rotation entre ledit bras (7) et le balai (9), ladite pièce terminale (5) accueillant intérieurement ladite interface de connexion (11), **caractérisé en ce que** ladite pièce terminale (5) est configurée pour mettre en prise ladite interface de connexion (11) de façon orientée, relativement à la pièce terminale (5), par l'intermédiaire d'au moins une patte (43, 43') repliée de ladite pièce terminale (5), dans une position, dite de service, autorisant la déconnexion et/ou la connexion du balai (9) sur le bras (7), ladite patte (43, 43') étant repliée à l'intérieur de ladite pièce terminale (5) et étant issue de matière avec ladite pièce terminale (5).

2. Ensemble (1) selon la revendication 1, dans lequel ladite interface de connexion (11) est mobile en rotation par rapport à la pièce terminale (5) d'une position de travail du système d'essuyage (3), hors de ladite mise en prise, à ladite position de service.

3. Ensemble (1) selon l'une quelconque des revendications précédentes dans lequel ladite position de mise en prise correspond au passage de ladite position à un point dur de verrouillage.

4. Ensemble (1) selon l'une quelconque des revendications précédentes dans lequel ladite pièce terminale (5) comporte un corps (41) configuré pour solidariser ladite interface de connexion (11) audit corps, lors de ladite mise en prise, par assemblage à des formes issues de matière dudit corps (41).

5. Ensemble (1) selon l'une quelconque des revendications précédentes dans lequel ledit un corps (41) est configuré pour accueillir ledit adaptateur (13) selon un mouvement de translation.

6. Ensemble (1) selon l'une quelconque des revendications précédentes dans lequel la patte (43) est pourvue d'un orifice (45) pour permettre l'engagement d'un pion (47) de l'interface de connexion (11) lors de ladite mise en prise de l'interface de connexion (11) à la pièce terminale (5).

7. Ensemble (1) selon la revendication précédente dans lequel ladite patte (43) est disposée à l'intérieur de la partie terminale (5), en étant formée à la partie supérieure de la pièce terminale (5).

8. Ensemble (1) selon l'une quelconque des revendications 1 à 6, dans lequel la patte (43') est conformée pour recevoir en prise au moins un ergot (47') de ladite interface de connexion, lors de ladite mise en prise de ladite interface de connexion (11) à la pièce terminale (5).

9. Ensemble (1) selon l'une quelconque des revendications précédentes, conformé pour que ladite position de mise en prise corresponde à un angle d'apiquage nul ou proche, voire négatif, du balai (9) par rapport au bras (7).

10. Dispositif de connexion (12) d'un système d'essuyage (3) de pare brise de véhicule comprenant ledit ensemble (1) selon l'une quelconque des revendications précédentes, un connecteur mécanique (15), destiné à être fixé sur ledit balai (9) pour son rattachement au bras (7) porte-balai, et ledit adaptateur (13) destiné à être monté articulé sur ledit connecteur mécanique (15) pour permettre la rotation entre le balai (9) et le bras (7), ledit adaptateur (13) étant configuré pour être inséré dans ladite pièce terminale (5).

11. Dispositif de connexion (12) selon la revendication 10, dans lequel ledit connecteur mécanique (15) est configuré pour permettre un raccordement hydraulique et/ou électrique du balai (9) à ladite interface de connexion (11).

12. Dispositif de connexion (12) selon l'une quelconque des revendications 10 ou 11, dans lequel ledit l'adaptateur (13) comprend un bouton de verrouillage (23) coopérant dans une ouverture (25) de la pièce terminale (5).

13. Dispositif de connexion (12) selon l'une quelconque des revendications 10 à 12, dans lequel ledit connecteur mécanique (15) est prévu pour supporter ladite interface de connexion (11).

14. Système d'essuyage (3) de pare brise de véhicule comprenant un balai (9), un bras (7) porte-balai et un dispositif de connexion (12) selon l'une des revendications 10 à 13 permettant d'accrocher ledit balai (9) audit bras (7) porte-balai.

## Patentansprüche

1. Einheit (1) zur Umsetzung eines Scheibenwischsystems (3) für eine Windschutzscheibe eines Kraftfahrzeugs, umfassend ein Endstück (5) eines Wischblatttragarms (7), der dazu bestimmt ist, ein Wischblatt (9) zu verlagern, wobei die Einheit ferner eine Anschlussschnittstelle (11) umfasst, wobei das Endstück (5) eingerichtet ist, um einen Adapter (13) aufzunehmen, der die Drehung zwischen dem Arm (7) und dem Wischblatt (9) ermöglicht, wobei das Endstück (5) innen die Anschlussschnittstelle (11) aufnimmt, **dadurch gekennzeichnet, dass** das Endstück (5) eingerichtet ist, um die Anschlussschnittstelle (11) in Bezug zum Endstück (5) ausgerichtet mit Hilfe mindestens einer umgelegten Klaue (43, 43') des Endstücks (5) in einer so genannten Betriebsposition einrasten zu lassen, die die Trennung und/oder die Verbindung des Wischblattes (9) auf dem Arm (7) gestattet, wobei die Klaue (43, 43') zum Inneren des Endstücks (5) umgelegt und aus einem Stück mit dem Endstück (5) ist.

2. Einheit (1) nach Anspruch 1, bei der die Anschlussschnittstelle (11) in Bezug zum Endstück (5) von einer Arbeitsposition des Scheibenwischsystems (3) ohne Einrasten in die Betriebsposition drehbeweglich ist.

3. Einheit (1) nach einem der vorhergehenden Ansprüche, bei der die Einrastposition dem Übergang von der Position zu einem festen Verriegelungspunkt entspricht.

4. Einheit (1) nach einem der vorhergehenden Ansprüche, bei der das Endstück (5) einen Körper (41) umfasst, der eingerichtet ist, um die Anschlussschnittstelle (11) mit dem Körper beim Einrasten durch mit dem Körper (41) einstückige Formverbindungen zu verbinden.

5. Einheit (1) nach einem der vorhergehenden Ansprüche, bei der ein Körper (41) eingerichtet ist, um den Adapter (13) in einer Translationsbewegung aufzunehmen.

6. Einheit (1) nach einem der vorhergehenden Ansprüche, bei der die Klaue (43) mit einer Öffnung (45) versehen ist, um das Eingreifen eines Stiftes (47) der Anschlussschnittstelle (11) beim Einrasten der Anschlussschnittstelle (11) auf dem Endstück (5) zu ermöglichen.

7. Einheit (1) nach dem vorhergehenden Anspruch, bei der die Klaue (43) innerhalb des Endstücks (5) angeordnet ist, wobei sie am oberen Teil des Endstücks (5) ausgebildet ist.

8. Einheit (1) nach einem der Ansprüche 1 bis 6, bei der die Klaue (43') ausgebildet ist, um mindestens einen Haken (47') der Anschlussschnittstelle beim Einrasten der Anschlussschnittstelle (11) am Endstück (5) einrastend aufzunehmen.

9. Einheit (1) nach einem der vorhergehenden Ansprüche, die ausgebildet ist, dass die Einrastposition einem Anschlusswinkel gleich oder nahe Null bzw. einem negativen Anschlusswinkel des Wischblattes (9) in Bezug zum Arm (7) entspricht.

10. Vorrichtung (12) zur Verbindung eines Scheibenwischsystems (3) einer Fahrzeugwindschutzscheibe, umfassend die Einheit (1) nach einem der vorhergehenden Ansprüche, einen mechanischen Verbinder (15), der dazu bestimmt ist, auf dem Wischblatt (9) zu seiner Befestigung am Wischblatttragarm (7) befestigt zu sein, und den Adapter (13), der dazu bestimmt ist, gelenkig auf dem mechanischen Verbinder (15) montiert zu sein, um die Drehung zwischen dem Wischblatt (9) und dem Arm (7) zu ermöglichen, wobei der Adapter (13) eingerichtet ist, um in das Endstück (5) eingesetzt zu werden.

11. Verbindungsvorrichtung (12) nach Anspruch 10, bei der der mechanische Verbinder (15) eingerichtet ist, um einen hydraulischen und/oder elektrischen Anschluss des Wischblattes (9) an die Anschlussschnittstelle (11) zu ermöglichen.

12. Verbindungsvorrichtung (12) nach einem der Ansprüche 10 oder 11, bei der der Adapter (13) einen Verriegelungsknopf (23) umfasst, der in einer Öffnung (25) des Endstücks (5) zusammenwirkt.

13. Verbindungsvorrichtung (12) nach einem der Ansprüche 10 bis 12, bei der der mechanische Verbinder (15) dazu vorgesehen ist, die Anschlussschnittstelle (11) zu tragen.

14. Scheibenwischsystem (3) für eine Fahrzeugwindschutzscheibe, umfassend ein Wischblatt (9), einen Wischblatttragarm (7) und eine Verbindungsvorrichtung (12) nach einem der Ansprüche 10 bis 13, die es ermöglicht, das Wischblatt (9) am Wischblatttragarm (7) zu befestigen.

## Claims

1. Assembly (1) for producing a motor vehicle windscreen wiping system (3), including an end fitting (5) of a wiper arm (7) adapted to move a wiper (9), said assembly further including a connection interface (11), said end fitting (5) being configured to accept an adapter (13) allowing rotation between said arm (7) and the wiper (9), said end fitting (5) internally accommodating said connection interface (11), **characterized in that** said end fitting (5) is configured to engage said connection interface (11) in an oriented manner, relative to the end fitting (5), via at least one folded tab (43, 43') from the end fitting (5), in a so-called service position, allowing the disconnection and/or the connection of the wiper (9) on the arm (7), said tab (43, 43') being folded toward the inside of the end fitting toward the inside of the end fitting (5) and being in the same material from the end fitting (5).

2. Assembly (1) according to Claim 1, wherein said connection interface (11) is rotationally mobile relative to the end fitting (5) from a working position of the wiping system (3), out of said engagement, to said service position.

3. Assembly (1) according to any one of the preceding claims, wherein said position of engagement corresponds to the transition from said position to a hard locking point.

4. Assembly (1) according to any one of the preceding claims, wherein said end fitting (5) comprises a body (41) configured to securely attach said connection interface (11) to said body, at the time of said engagement, by assembly with shapes derived from the material of said body (41).

5. Assembly (1) according to any one of the preceding claims, wherein said body (41) is configured to accept said adapter (13) by a translational movement.

6. Assembly (1) according to any one of the preceding claims, wherein the end fitting (5) comprises at least one tab (43), provided with an orifice (45) to allow the engagement of a pin (47) of the connection interface (11) upon said engagement of the connection interface (11) with the end fitting (5) .

7. Assembly (1) according to the preceding claim, wherein said tab (43) is arranged inside the end fitting (5), being formed in a top part of the end fitting (5).

8. Assembly (1) according to any one of Claims 1 to 6, wherein the end fitting (5) comprises at least one tab (43') shaped to receive at least one snug (47') of said connection interface, upon said engagement of said connection interface (11) with the end fitting (5).

9. Assembly (1) according to any one of the preceding claims, shaped so that said position of engagement corresponds to an apeak angle of zero or close to zero, even a negative angle, of the wiper (9) relative to the arm (7).

10. Connection device (12) of a vehicle windscreen wiping system (3) including said assembly (1) according to any one of the preceding claims, a mechanical connector (15) adapted to be fixed to said wiper (9) to attach it to the wiper arm (7), and said adapter (13) adapted to be articulated on said mechanical connector (15) to allow rotation between the wiper (9) and the arm (7), said adapter (13) being configured to be inserted in said end fitting (5).

11. Connection device (12) according to Claim 10, wherein said mechanical connector (15) is configured to allow a hydraulic and/or electrical connection of the wiper (9) to said connection interface (11).

12. Connection device (12) according to any one of Claims 10 or 11, wherein said adapter (13) comprises a locking button (23) cooperating in an opening (25) of the end fitting (5).

13. Connection device (12) according to any one of Claims 10 to 12, wherein said mechanical connector (15) is adapted to support said connection interface (11) .

14. Vehicle windscreen wiping system (3) including a wiper (9), a wiper arm (7) and a connection device (12) according to any one of Claims 10 to 13 for attaching said wiper (9) to said wiper arm (7).
